# EUROPEAN PATENT APPLICATION

(11) **EP 0 669 247 A1**
(43) Date of publication of application: **30.08.1995**
(21) Application number: 94850231.5
(22) Date of filing: 29.12.1994
(51) Int. Cl.: B62K 25/30, B62K 25/04, B62K 19/02

(54) **Rear suspension frame for two-wheeled vehicles**

(30) Priority: 25.02.1994 US 202228
(71) Applicant: SANDVIK AKTIEBOLAG, S-811 81 Sandviken 1 (SE)
(72) Inventor: Shaffer, William E., Kennewick, Washington 99336 (US)
(74) Representative: Taquist, Lennart

(57) **Abstract**

A rear wheel suspension for two wheeled vehicles comprises a pair of curved, elastic suspension stays (50,52) cooperating with a pair of wheel or chain stays (40) to form both a rear triangle to support the rear wheel and a suspension to absorb shock and vibration from the rear wheel. The curved suspension stays (50,52) bend resiliently to absorb shock and vibration generated at the rear wheel under riding load conditions. The suspension stays (50,52) are pivotally connected to the main frame (30) and the wheel stays (40) to allow freedom in bending. The wheel stays (40) are pivotally connected to the main frame (30) at a point (42) below the suspension stay connections (54,56). The suspension stays (50,52) are formed as elliptically profiled tubular members to permit bending in a vertical plane and resist horizontal bending or twisting to provide frame stability.

## Description

### FIELD OF THE INVENTION

The present invention relates to frames for two wheeled vehicles. More particularly, the present invention relates to a rear suspension for a two wheeled vehicle in which elements of the frame cooperate to act as suspension elements.

### BACKGROUND AND SUMMARY OF THE INVENTION

In motorcycles, various suspension designs have long been used for both the front and rear wheels to dampen road shock, improve rider comfort and endurance, and improve control of the vehicle. The growth in popularity of off-road bicycle racing and recreational riding has lead in recent years to much activity in bicycle designs for front and rear wheel suspension systems. While suspension design activity has focused mainly on off-road bicycles, for example, mountain bikes, suspension systems are also useful in road bicycles.

Much recent bicycle suspension design incorporates elements of motorcycle suspension systems modified for use on a bicycle frame. Common design elements include telescoping front fork assemblies using hydraulic, coil spring or elastomeric material dampers, and hydraulic and coil spring systems for the rear wheel. A typical rear wheel bicycle suspension uses the chain stay as a pivoting member and provides a shock absorbing cylinder in a connecting linkage with the seat stays.

The use of motorcycle suspension elements adds parts and frame elements to the bicycle, which adds weight to the frame. Keeping weight at a minimum is important in bicycle design, and particularly so in racing bicycle design, because any weight must be overcome when climbing and when accelerating the bicycle. In addition, the known suspension designs tend to be complicated, adding expensive parts and requiring maintenance.

The present invention provides a frame for a two wheeled vehicle that includes a main frame having at least a top tube, a seat tube attached to the top tube and extending downward, and a bottom bracket attached at a bottom of the seat tube. A head tube is attached at a forward end of the top tube in a generally vertical orientation, and a down tube is attached to the head tube and the bottom bracket. A pair of wheel stays is attached at a rearward side of the bottom bracket and extends rearward in a generally horizontal plane, the wheel stays being pivotable relative to the main frame, and being sufficiently laterally spaced to position a portion of a wheel therebetween. The wheel stays include a rearward portion having wheel mounting means. A pair of suspension stays having forward ends and rearward ends are pivotally attached at the forward end to one of the top tube and the seat tube, and at the rearward ends are pivotally attached to the wheel stays. Preferably, the suspension stays are pivotally attached to the wheel mounting means. Each of the suspension stays is curved in a vertical plane from the forward end to the rearward end so that the suspension stays are resiliently bendable in the vertical plane.

The present invention provides a bicycle frame in which a rear frame acts as a suspension, and the conventional springs, hydraulic or pneumatic shock absorber, and associated linkages and hardware known in the art are eliminated. According to the present invention, the rear frame elements, the seat stays are shaped and mounted to provide resilient bending to act as a suspension. According to the invention, the amount of flexibility of the suspension stays is determined as a function of the length, curvature and profile of the suspension stays, as further described below.

According to the present invention, a pair of seat, or suspension, stays are formed with a curvature and pivotally fastened to a main frame so that the curvature of each stay lies in a vertical plane. A rear end of each of the stays is pivotally fastenable to a chain, or wheel, stay. The suspension stays are resiliently bendable in the vertical plane to absorb shock or vibration encountered by the rear wheel under riding load conditions by allowing the rear wheel to move relative to the frame. The amount of bending, and consequent rear wheel movement, is selected for the particular use of the frame, for example, a greater degree of bending is selected for off-road bicycles than for on-road bicycles to accommodate the rougher off-road riding surface.

The wheel stays, or chain stays, of the present invention are pivotally fastened to the main frame at a point below the suspension stays, and generally adjacent to a bottom bracket. A rearward end of the wheel stays includes wheel mounting means.

According to the invention, the length and attachment location of the suspension stays are determined by the amount of resilient bending desired. The suspension stays are fastened to one of a top tube and a seat tube of the main frame. For an off-road bicycle frame, the suspension stays are relatively longer and may, for example, be fastened to the top tube forward of the seat tube, resulting in relatively more elasticity to gain a greater degree of bending, thus allowing more rear wheel movement. In road bicycles, which do not require as much rear wheel shock absorption, the suspension stays are relatively shorter and may be fastened to the seat tube so that the suspension stays are relatively stiffer and less elastic.

According to a preferred embodiment of the invention, the suspension stays comprise tubular members. In a particularly preferred embodiment of the invention, the tubes are elliptical in cross section, and are fastened to the frame so that a minor diameter of the cross section is arranged in the vertical plane of the curve. This arrangement allows good vertical bending while resisting lateral bending, thus retaining desired frame rigidity. The particular elliptical profile of the suspension stays can also be selected to provide a desired flexibility. In addition, the elliptical profile can be selected to control the rebound characteristics of the suspension tubes. Generally, a greater ratio between the major and the minor diameters provides greater flexibility in the suspension tubes. The suspension stays may also be solid, rod-shaped members.

According to another aspect, the suspension stays are connected together by a bridge to improve lateral and torsional stability. The bridge is preferably formed as a rectangular tube and is fastened to the suspension stays at a point rearward of the seat tube.

According to yet another aspect of the invention, tubular suspension stays may have a foam injected in an interior to absorb vibration and dampen rebound of the stay after bending for improved control of the bicycle.

According to a preferred embodiment of the invention, the curvature of the suspension tubes is directed concave upward. The direction of the curvature may alternatively be directed concave downward.

The suspension stays may be formed of any suitable elastically bendable material, and in a preferred embodiment are formed of titanium. Alternatively, steel alloys, aluminum alloys, and composite materials may also be used.

### BRIEF DESCRIPTION OF THE DRAWING FIGURES

The present invention can be further understood with reference to the following description in conjunction with the appended drawings, wherein like elements are given the same reference numeral. In the drawings:
Fig. 1 is a side view of a bicycle frame in accordance with the present invention;
Fig. 2 is a partial top view of the bicycle frame of Fig. 1 illustrating the suspension stays;
Fig. 3 is a cross sectional view of a suspension stay;
Fig. 4 is a cross sectional view of an alternative embodiment of the suspension stay;
Fig. 5 is an alternative embodiment of the bicycle frame of Fig. 1;
Fig. 6 is another alternative embodiment of the bicycle frame of Fig. 1;
Fig. 7 is yet another alternative embodiment of the bicycle frame of Fig. 1;
Fig. 8 is a further alternative embodiment of the bicycle frame of Fig. 1;
Fig. 9 is an exploded view of a pivot mounting connecting the suspension stay to a top tube of the bicycle frame of Fig. 1;
Fig. 10 is an exploded view of a pivot mounting to connect the suspension stay to a wheel stay;
Fig. 11 is an enlarged partial side view of the frame of Fig. 1 showing the mounting of the wheel stay to the main frame;
Fig. 12 is an exploded top view of the pivot mounting of Fig. 11.

### DETAILED DESCRIPTION OF PREFERRED EMBODIMENTS

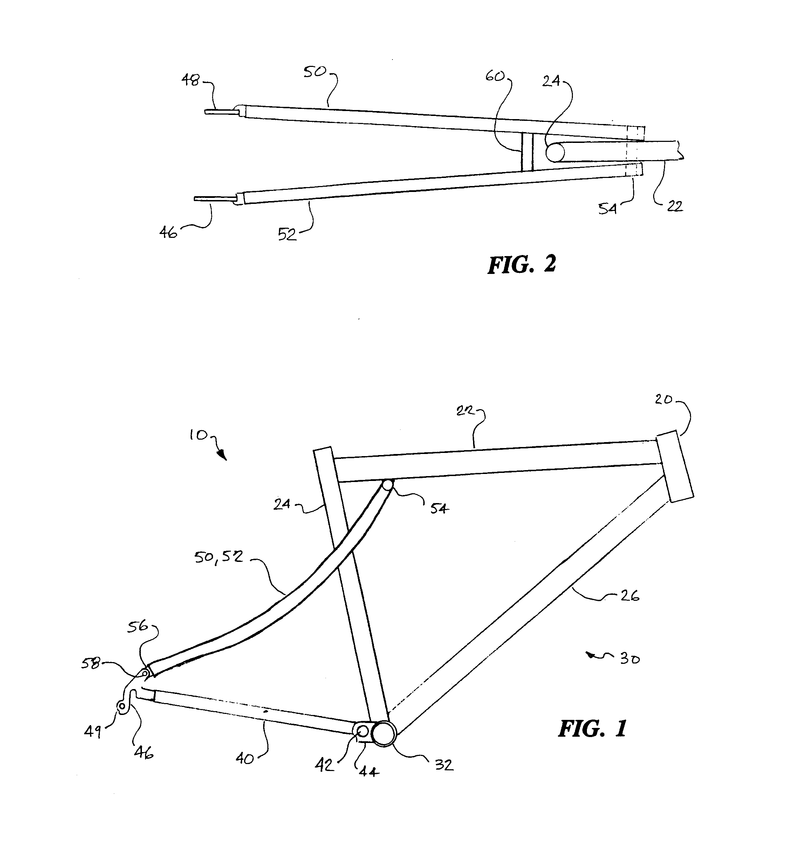

Fig. 1 is a side view of a bicycle frame 10 according to the present invention. The use of a bicycle frame in the following description is meant to be illustrative and not limiting. The invention may be incorporated in motorcycles, mopeds and other two wheel vehicles.

The frame 10 illustrated in Fig. 1 includes a head tube 20, a top tube 22, a seat tube 24 and a down tube 26, which are attached together to constitute a main frame 30, as is conventional in the art. A bottom bracket 32 is attached at the junction between the down tube 26 and the seat tube 24. The bottom bracket 32 supports a pedal crank shaft (not illustrated).

According to the present invention, the rear wheel supporting elements are shaped and fastened to the frame 10 to form a rear suspension. Referring to Fig. 2, which illustrates a partial top view of the frame, and to Fig. 1, a pair of wheel stays 40, also known as chain stays, are attached by pivoting means 42 to a support member 44 on the bottom bracket 32. The wheel stays 40 extend rearward from the frame 10 in a generally horizontal plane. At a rearward end of each of the wheel stays 40 are wheel mounting means 46, 48, known in the art as drop-outs, to which a wheel axle (not illustrated) is mounted. As is conventional in the art, the right hand drop-out 46 illustrated in Fig. 1 includes means 49 for mounting a rear gear shifter.

As shown in Fig. 1, with reference to a first embodiment of the invention, a pair of suspension stays 50, 52 is fastened by pivoting means 54 to the top tube 22 at a point forward of the seat tube 24. As described below, alternatively, other geometries may be employed. The suspension stays 50, 52 extend rearward from the frame 10 and are attached to the wheel stays 40 by pivoting means 56. In the illustrated embodiment, the suspension stays 50, 52 are pivotally attached to the drop-outs 44, 46. The suspension stays 50, 52 may alternatively be attached directly to the wheel stays 40. As shown in Fig. 2, the wheel stays 40 and the suspension tubes 50, 52, are arranged so that a space to accept a portion of a wheel is provided therebetween.

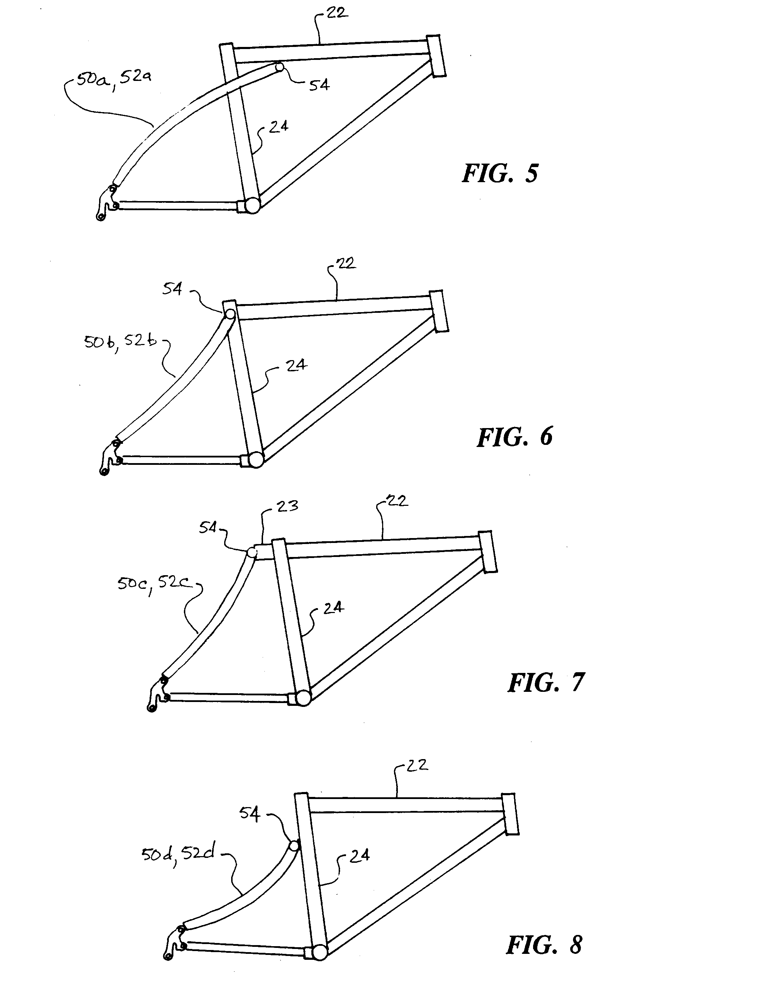

The suspension stays 50, 52 are curved in a vertical plane, with the curvature directed concave upward. Alternatively, as shown in Fig. 5, the suspension stays 50a, 52a may be positioned with the curvature directed concave downward.

The suspension stays 50, 52 and wheel stays 40 cooperate to act as the frame rear wheel suspension. As the bicycle travels over a surface and encounters bumps, holes, and other deviations in the surface, the impact of the rear wheel on the deviations is absorbed by resilient bending of the stays 50, 52 from their normal position. The pivot connections 54, 56 for the suspension stays 50, 52, and the pivot connection 42 for the wheel stays 40 facilitate bending of the stays. The curvature of the suspension stays 50, 52 is selected such that at least some portion of the suspension stay lies in a direction to permit bending of the stay as a result of a force on the rear wheel. As further described below, the flexibility of the suspension stays 50, 52 is adjusted by the selection of the length of the stay, the curvature, and the cross-sectional profile.

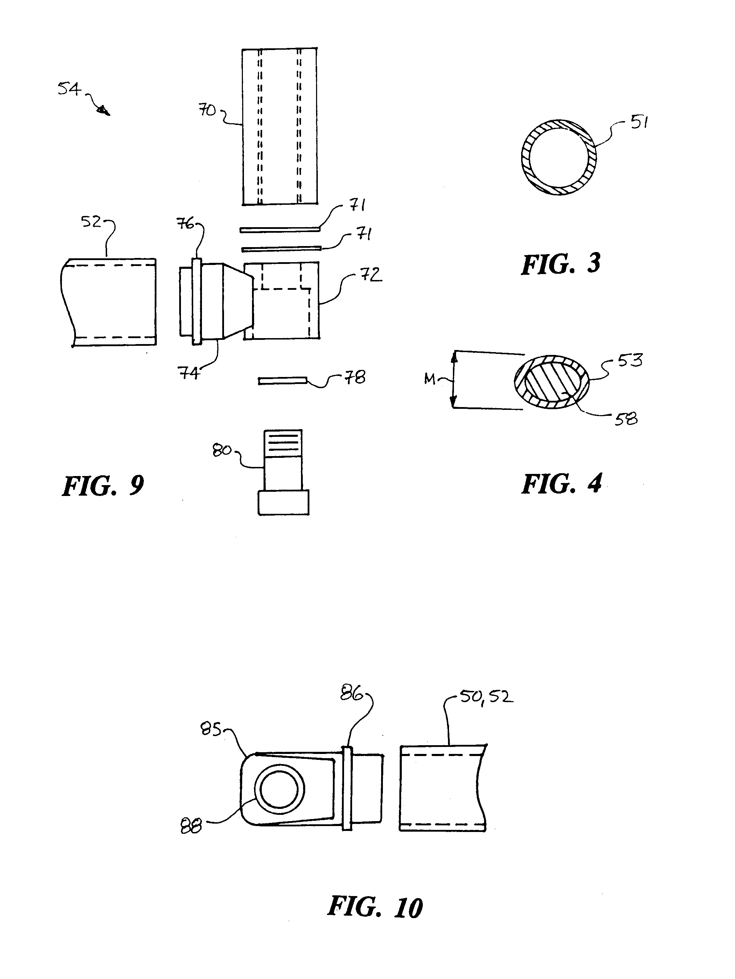

The suspension stays 50, 52 are formed of a material capable of resilient elastic bending. However, the material must be sufficiently resilient and strong to avoid cracking or breaking during repeated flexure. The particular two wheel vehicle and its intended use determine how much flexure is required in the suspension stays. In a preferred embodiment, titanium, which has a combination of excellent strength, toughness, and elasticity has been utilized for the suspension stays. Alternatively, the suspension stays 50, 52 may be formed of a steel alloy, an aluminum alloy, or a composite material. The suspension stays 50, 52 are preferably shaped as thin walled tubes. As shown in Fig. 3, the suspension stay 51 may have a circular profile, or preferably, as shown in Fig. 4, an elliptical profile 53. The elliptical tube 53 is most advantageously incorporated in the frame by orienting a minor diameter M of the elliptical profile to coincide with the vertical plane of the curvature (see Fig. 1). This allows the suspension stays to have good flexibility in the desired vertical direction, while resisting unwanted bending in the horizontal, or lateral, direction. A tubular stay, illustrated, for example, the tube 53 of Fig. 4, may also have a foam filler 58 in the interior of the tube to absorb vibration in the tube and to dampen the recovery rebound of the suspension stays after bending. The foam filler 58 may be composed of any suitable light weight, elastic energy absorbing foam material, such as polyurethane, rubber latex, or a polyethylene or vinyl polymer. Alternatively, the suspension stays may be formed of a composite material having suitable resilient properties in a tubular circular or elliptical shape, or as a solid circular or elliptical element. As a further alternative, the suspension stays may be bar members shaped with a rectangular profile.

As shown in Fig. 2, a bridge 60 connects the suspension stays 50, 52. The bridge 60 is illustrated attached to the suspension stays 50, 52 rearward of the seat tube 24. The bridge 60 may also be attached to the suspension stays 50, 52 forward of the seat tube 24. The bridge 60 serves as a stabilizer to minimize relative lateral movement between the suspension stays, and the reduce torsion transmitted to the suspension stays in off-center wheel impacts. The bridge also further ensures that the two suspension stays act together as a unit. In a preferred embodiment of the invention, the bridge 60 is formed as a rectangular profile tube, and more preferably, as a square profile tube. In a rectangular tube, bending stresses are concentrated at the faces. The bridge 60 is positioned so that faces are arranged to best resist unwanted bending. The bridge 60 may alternatively be formed with a circular or elliptical profile.

The curvature formed in the suspension stays 50, 52 provides a spring ratio that allows the suspension stays to deflect or bend a predetermined amount from a resting position for a given force on the rear wheel. The curvature may be altered to adjust the spring ratio or constant. More rounded or deeper curves provide suspension stays having relatively greater flexibility. Flatter curves provide relatively stiffer suspension stays. In addition to the curvature, the length of the suspension stays 50, 52 has an effect on the spring ratio of the stays, longer stays tend to have more flexibility than do shorter stays. Further, the diameter of the suspension stays and the material of construction have an effect on the flexibility of the suspension stays 50, 52.

The profile of the suspension stays 50, 52 is also selected to provide flexibility characteristics. Elliptical profile tubes, as shown in Fig. 4, have greater flexibility in the direction of the minor diameter M than do circular tubes. The flexibility increases as the ratio of the major diameter to the minor diameter increases, that is, as the tube is flattened. In addition, the rate of recovery of the suspension stays 50, 52 from a bending force is affected by the profile selected, the flatter elliptical profiles providing for a longer recovery time.

The flexibility of the suspension stays 50, 52, and the consequent deflection of the rear wheel, in response to riding surface shocks, is selected for the frame type and intended use. For example, off-road frames are given greater flexibility, and, for example, may be generally provided a bending range for up to three to five inches of rear wheel movement. Road bicycles, on the other hand, require less shock absorption, and may consequently have suspension tubes with less flexibility, having a bending range for on the order of 0.5 to 1 inch of rear wheel travel.

The foregoing deflection ranges are exemplary only. The amount of flexibility built into the suspension stays can be greater, but must be considered in view of such practical matters, among others, as the effects of rebound on control of the bicycle. Another practical limitation on flexibility is found in the context of the range of movement of the rear wheel. Upward movement of the rear wheel, which may be understood from Fig. 1, also moves the rear wheel closer to the seat tube. Rear wheel movement must be limited so that contact between the wheel and the seat tube is avoided. In addition, as is known in the art, excessive flexibility or softness in the suspension robs power put into the pedal crank by the rider. Excess flexibility can also result in poor control of the bicycle.

The location of the forward suspension stay pivot 54 affects the front to rear dynamic balance of the bicycle frame 10. The bending reaction force transmitted from the suspension stays 54 to the frame 10 is directed relative to the center of gravity of the frame 10 according to the location of the front pivot 54. For example, positioning the pivot 54 farther forward of the seat tube 24 generally results in greater relative movement of the frame 10 due to bending of the suspension stays 50, 52. Thus, the location of the pivot point 54, along with different suspension stay configurations of length, curvature and profile, can be used to tune the suspension characteristics of the frame.

Illustrative examples of alternative frame geometries are shown in Figs. 6 through 8. Shown in Fig. 6 the suspension stays 50, 52 may be connected to the seat tube 24 at an upper end portion, a more conventional location practiced in the art. Fig. 7 shows the suspension stays 50, 52 attached to a portion of the top tube 23 extending rearward of the seat tube 24. Fig. 8 shows the suspension stays 50, 52 attached to the seat tube 24 below the level of the top tube 22 portion of the seat post.

The alternative frame configurations may be more suitable for use in road bicycles or motorcycles. For example, the shorter suspension stays 50b, 52b of Fig. 6, or the stays 50d, 52d of Fig. 8 may be more suitable for a bicycle frame because of greater stiffness. The arrangement of Fig. 7, in which the suspension stays 50c, 52c, are attached to an extension of the top tube 22, is useful if an elongated frame is desired. The position of the pivot 54 may also modify the dynamic balance of the frame, as described above. The frames shown in Figs. 6, 7 and 8, which locate the pivot 54 farther rearward than the frame of Fig. 1, changes the inertia of the frame in rebound after suspension stay bending.

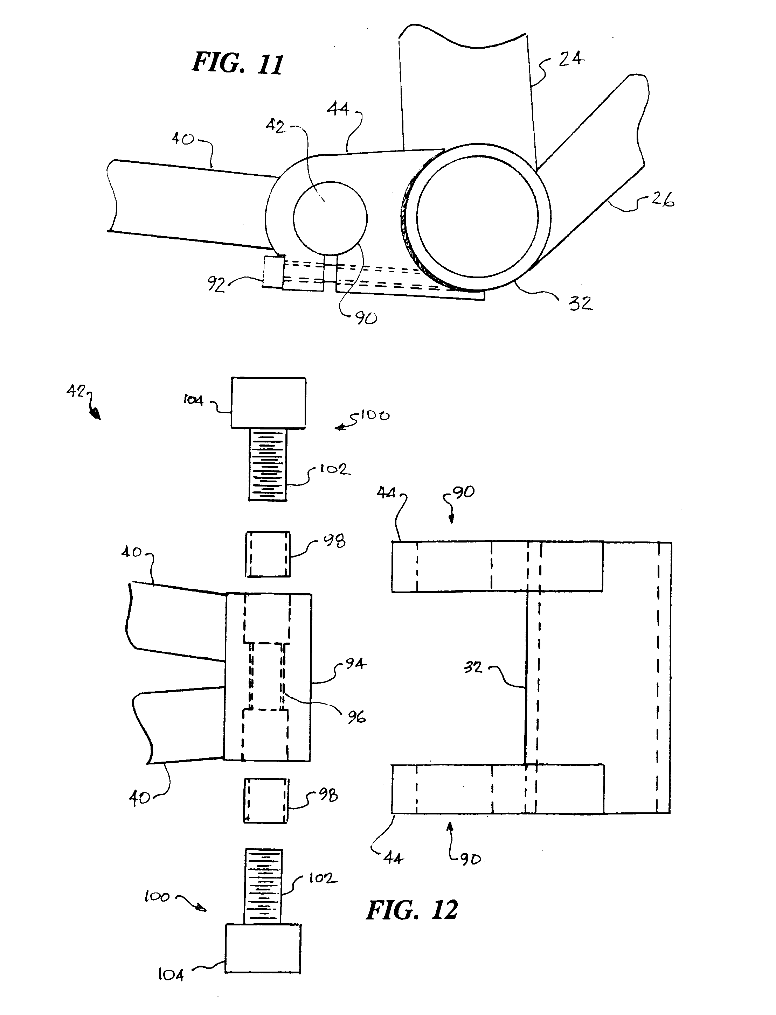

Presently preferred embodiments of the suspension stay and wheel stay pivots 54, 56 and 42 are described in connection with Fig. 9 through Fig. 12.

Fig. 9 is an exploded view of the forward suspension stay pivot 54. The suspension stay 52 is illustrated in partial view. The pivot 54 comprises a mounting boss 70 that is attached to the forward mounting point, the top tube 22 or the seat tube 24 generally as illustrated in Fig. 1 and Fig. 2, by welding or other suitable means. The mounting boss 70 is a tubular member internally threaded. A mounting sleeve 72 includes a cone 74 that attaches to the suspension stay 52. The cone 74 is inserted in the suspension stay 52 so that the stay abuts the flange 76, and may be attached by welding or other suitable means. The mounting sleeve 72 is fastened to the mounting boss 70 by a bolt 80 in a manner that permits the mounting sleeve to pivot relative to the mounting boss. As shown, thrust bearings 71 are mounted between the mounting sleeve 72 and the mounting boss 70, and a washer 78 is mounted between the bolt 80 and the mounting sleeve 72. For the suspension stay 50 on the other side of the frame, an identical assemblage of mounting sleeve, cone and bolt are provided.

Fig. 10 is a plan view of the rearward pivot 56 of the suspension stay 50, 52. A pivot eye 85 is attached to the end of the suspension stay 50, 52 by inserting the pivot eye into the suspension tube to abut the flange 86. A bolt (not illustrated) may be inserted through a countersunk hole 88 in the pivot eye to fasten the pivot eye to a mounting hole 58 in the drop out 46, as shown in Fig. 1.

Fig. 11 is a side view of a portion of the frame 10 of Fig. 1 adjacent to the bottom bracket 32. The wheel stay pivot means 42 attached to the wheel stays 40, and the support member 44 that supports the pivot means 42 on the main frame are shown. Fig. 12 is a top view of the pivot means 42 and support means 44 of Fig. 11. For clarity, the seat tube 24 and down tube 26 are removed from the bottom bracket 32, and the pivot means 42 is illustrated removed from the support means 44 and shown exploded.

The support means 44 comprises a pair of mounting brackets attached to the bottom bracket 32 and extending generally horizontally rearward. The brackets 44 have a mounting hole 90 that is adjusted by a bolt 92. The pivot means 42 comprises a housing 94 that is attached to the forward end of the wheel stays 40 by suitable means, such as welding. The housing 94 includes an internally threaded portion 96. At opposing ends of the housing 94 are mounted rotatable bearings 100. Press fit bearings 98 are pressed into the housing to support the rotatable bearings 100. The bearings 100 have threaded shafts 102 that fasten to the threaded portion 96 of the housing 94. The heads 104 of the bearings 100 are rotatable relative to the shafts 102. The pivot means 42 is positioned between the brackets 44 with the heads 104 of the opposing bearings 100 held in the opposing mounting hole 90. The bolt 92 is tightened to secure the heads 104 to the brackets 44. The housing 94 and wheel stays 40 are thus free to pivot relative to the brackets 44 and bottom bracket 32.

The foregoing has described the preferred principles, embodiments and modes of operation of the present invention; however, the invention should not be construed as limited to the particular embodiments discussed. Instead, the above-described embodiments should be regarded as illustrative rather than restrictive, and it should be appreciated that variations, changes and equivalents may be made by others without departing from the scope of the present invention as defined by the following claims.

## Claims

1. A frame for a two wheeled vehicle, comprising:
a head tube having an upper and a lower portion;
a top tube having a front and a rear end;
a down tube having a front and a rear end, the down tube front end attached at the lower portion of the head tube;
a seat tube having a top end and a bottom end, the rear end of the top tube attached adjacent to the top end;
a bottom bracket attached to the bottom of the seat tube and the rear end of the down tube;
a pair of wheel stays pivotally attached at a rearward side of the bottom bracket and extending rearward in a generally horizontal plane, the wheel stays defining a space therebetween, a rearward end of the wheel stays including wheel mounting means;
a pair of elastic suspension stays having forward ends and rearward ends, the forward ends pivotally attached to one of the top tube and the seat tube, and the rearward ends pivotally attached at the rearward end of the wheel stays, each of the suspension stays being curved in a vertical plane from said forward end to the rearward end.

2. A rear wheel suspension for a two wheeled vehicle, comprising:
a pair of elongated curved members, each member having a forward end and a rearward end, each forward end being attachable to a main frame of a two wheeled vehicle for vertical pivoting movement, the curves of the members lying in substantially vertical planes, the members being resiliently bendable in the plane of curvature responsive to loads encountered by the rear wheel in riding; and,
a pair of wheel stays, each stay having a front end and a rear end, the front end being pivotally attachable to a portion of a main frame of the two wheeled vehicle for vertical pivoting movement, the rear end of each of the stays being pivotally attached to the rearward end of one elongated member for relative pivoting movement,
the wheel stays and the suspension stays cooperating to absorb energy of a rear wheel and minimize transmission of said energy to the main frame.

3. The suspension as claimed in claim 2, wherein the curved members are tubular members.

4. The suspension as claimed in claim 3, wherein the tubular members are of elliptical cross section, a minor diameter of the cross section being positioned in the vertical plane of curvature.

5. The suspension as claimed in claim 2, wherein the tubular members are of circular cross section.

6. The suspension as claimed in claim 3, wherein the curved, tubular members have a foam filler in an interior of the tubular members to absorb vibration and impact energy.

7. The suspension as claimed in claim 2, wherein the curved members comprise solid rod shaped elements of generally circular cross section.

8. The suspension as claimed in claim 2, wherein the curved members are formed of titanium.

9. A frame for a two wheeled vehicle, comprising:
a main frame having at least a top tube, a seat tube attached to the top tube and extending downward, and a bottom bracket attached at a bottom of the seat tube;
a pair of wheel stays attached at a rearward side of the bottom bracket and extending rearward in a generally horizontal plane, the wheel stays being pivotable relative to the main frame, the wheel stays being sufficiently laterally spaced to position a portion of a wheel therebetween, a rearward portion of the wheel stays including wheel mounting means;
a pair of suspension stays having forward ends and rearward ends, the forward ends pivotally attached to one of the top tube and the seat tube, and the rearward ends pivotally attached to the wheel stays, each of the suspension stays being curved in a vertical plane from said forward end to the rearward end the suspension stays being resiliently bendable in the vertical plane.

10. The frame as claimed in claim 8, wherein the suspension stays comprise tubular members.

11. The frame as claimed in claim 9, wherein the suspension stays further comprise a foam filler in an interior of the tubular members to absorb vibration and impact energy.

12. The frame as claimed in claim 8, wherein the suspension stays comprise tubular members of elliptical cross section, a minor diameter of the cross section being positioned in the vertical plane of the stay curvature.

13. The frame as claimed in claim 8, wherein the suspension stays comprise tubular members of circular cross section.

14. The frame as claimed in claim 8, wherein the suspension stays comprise solid rod shaped elements of generally circular cross section.

15. The frame as claimed in claim 8, wherein the suspension stays comprise rectangular shaped members.

16. The frame as claimed in claim 8, wherein the curvature of the suspension stays is concave in an upward direction.

17. The frame as claimed in claim 8, wherein the curvature of the suspension stays is concave in a downward direction.

18. The frame as claimed in claim 8, wherein the forward end of the suspension stays is attached to the top tube forward of the seat tube.

19. The frame as claimed in claim 8, wherein the forward end of the suspension stays is attached to the seat tube below the top tube.

20. The frame as claimed in claim 8, wherein the top tube extends rearward of the seat tube and the forward end of the suspension stays is attached to the top tube rearward of the seat tube.

21. The frame as claimed in claim 8, wherein the rearward end of the suspension stays is pivotally attached to a rearward end of the wheel stays.

22. The frame as claimed in claim 8, wherein the wheel stays are pivotally attached at a rear portion of the bottom bracket.

23. The frame as claimed in claim 8, further comprising a bridge tube positioned laterally between the suspension stays and attached to each of the stays.

24. The frame as claimed in claim 18, wherein the bridge tube has a rectangular cross-section.

25. The frame as claimed in claim 18, wherein the bridge tube has a generally circular cross-section.

26. The frame as claimed in claim 8, wherein at least the suspension tubes are formed of titanium.
